# EUROPÄISCHE PATENTANMELDUNG

(11) **EP 2 620 729 A2**
(43) Veröffentlichungstag der Anmeldung: **31.07.2013**
(21) Anmeldenummer: 13000240.5
(22) Anmeldetag: 17.01.2013
(51) Int. Cl.: F25D 23/00

(54) **Kühl- und/oder Gefriergerät**

(30) Priorität: 24.01.2012 DE 102012001344; 16.02.2012 DE 102012003147
(71) Anmelder: Liebherr-Hausgeräte Lienz GmbH, 9900 Lienz (AT)
(72) Erfinder: Köfele, Markus, 9961 Hopfgarten (AT)
(74) Vertreter: Herrmann, Uwe

(57) **Zusammenfassung**

Die vorliegende Erfindung betrifft ein Kühl- und/oder Gefriergerät mit wenigstens einem Kältemittelkreislauf, der zumindest einen Verflüssiger aufweist, der mit wenigstens einem Dämpfungselement in Verbindung steht, das Schwingungen des Verflüssigers dämpft und das zwischen dem Verflüssiger und wenigstens einem Teil des Gerätes angeordnet ist, wobei das Dämpfungselement teilweise oder vollständig aus einem geschäumten und/oder expandierten Material, vorzugsweise aus Schaumstoff, insbesondere aus PP oder PE und/oder einem expandierten Polymermaterial und insbesondere aus expandiertem Polypropylen (EPP), besteht oder dieses aufweist.

## Beschreibung

Die vorliegende Erfindung betrifft ein Kühl- und/oder Gefriergerät mit wenigstens einem Kältemittelkreislauf, der wenigstens einen Verflüssiger aufweist, der mit wenigstens einem Dämpfungselement in Verbindung steht, das Schwingungen des Verflüssigers dämpft und das zwischen dem Verflüssiger und wenigstens einem Teil des Gerätes angeordnet ist.

Bei bekannten Kühl- und/oder Gefriergeräten weisen die Kältemittelkreisläufe im allgemeinen wenigstens einen Verdampfer, wenigstens einen Kompressor, wenigstens einen Verflüssiger und wenigstens eine Drossel auf, die mit dem Verdampfereinlass in Verbindung steht, so dass ein geschlossener Kreislauf gebildet wird. Das in dem Verdampfer befindliche Kältemittel nimmt Wärme aus dem zu kühlenden Kompartiment auf. In dem nachgeschalteten Kompressor wird das verdampfte Kältemittel verdichtet und sodann dem Verflüssiger zugeführt, in dem das Kältemittel Wärme an die Umgebung abgibt. Das verflüssigte Kältemittel durchströmt sodann eine Drosselkapillare, nach deren Durchströmung es wieder dem Verdampfer zugeführt wird.

Aufgrund der Tatsache, dass der Verflüssiger direkt und ungedämpft an einem Gerätebereich, wie beispielweise an den rückseitigen Umkantungen der Seitenwände des Korpus, an einer Trägerplatte oder sonstigen Aufnahmen im Sockelbereich oder an anderer Stelle montiert sind, werden die Schwingungen, die vom Kompressor erzeugt werden bzw. die Kompressorhübe direkt vom Verflüssiger, der durch den Kältemittelkreislauf mit dem Kompressor in Verbindung steht, an die umgebenden Teile bzw. an die Geräteteile übertragen, die mit dem Verflüssiger in Verbindung stehen. Verflüssiger werden somit häufig unmittelbar an dem Gerät z. B. durch eine Schraubverbindung fixiert.

Um diese Übertragung von Schwingungen vom Verflüssiger an andere Teile des Gerätes zu dämpfen, ist es aus dem Stand der Technik bekannt, Verflüssiger mittels Gummi-/TPE-Teilen dämpfend anzuordnen, wobei diese Teile zwischen dem Verflüssiger und einem Geräteteil, wie beispielsweise einer Trägerplatte angeordnet sind. Dadurch wird die Übertragung von Schwingungen von dem Verflüssiger reduziert bzw. gedämpft.

Der vorliegenden Erfindung liegt die Aufgabe zugrunde, ein Kühl- und/oder Gefriergerät der eingangs genannten Art in vorteilhafter Weise weiterzubilden.

Diese Aufgabe wird durch ein Kühl- und/oder Gefriergerät mit den Merkmalen des Anspruchs 1 gelöst. Danach ist vorgesehen, dass der Verflüssiger mit einem Dämpfungselement in Verbindung steht, das zwischen dem Verflüssiger und wenigstens einem Teil bzw. Bereich des Gerätes angeordnet ist und das teilweise oder vollständig aus einem geschäumten und/oder expandierten Material besteht oder dieses aufweist.

Vorzugsweise handelt es sich bei dem expandierten Material um einen expandierten Kunststoff bzw. Kunststoffpolymer und/oder Polymerschaum und insbesondere um EPP, d.h. um expandiertes Polypropylen, jedoch sind auch andere expandierte Materialien denkbar und von der Erfindung mit umfasst. Vorzugsweise handelt es sich bei dem geschäumten Material um Schaumstoff, der vorzugsweise aus Polyethylen und/oder Polypropylen besteht oder aufweist.

Bei EPP handelt es sich vorzugsweise um einen Kunststoffschaum, der thermoplastisch und vorwiegend geschlossenzellig ausgeführt sein kann.

Gemäß einem weiteren Aspekt der Erfindung ist vorgesehen, dass das Dämpfungselement den Verflüssiger auf wenigstens zwei Seiten umgibt und/oder dass das Dämpfungselement einen Strömungskanal oder einen Teil eines Strömungskanals bildet, in dem der Verflüssiger angeordnet ist. Das Dämpfungselement kann somit als Aufnahme für den Verflüssiger dienen und einen Strömungskanal bilden oder begrenzen, in dem der Verflüssiger angeordnet ist. Das Dämpfungselement kann den Verflüssiger an einer oder mehreren Seiten des Verflüssigers umgeben.

In diesem Fall dient das Dämpfungselement somit nicht nur zur Dämpfung von Schwingungen des Verflüssigers, sondern bildet zusätzlich auch noch einen Strömungskanal zur Durchströmung von Luft oder dergleichen, durch die Wärme von dem Verflüssiger abgeführt werden kann. Vorzugsweise besteht dieses Dämpfungselement aus dem oben genannten expandierten und/oder geschäumten Material, vorzugsweise aus Schaumstoff und/oder einem expandierten Kunststoff und insbesondere aus EPP, d.h. aus expandiertem Polypropylen, oder weist ein solches Material auf.

Gemäß einer bevorzugten Ausgestaltung der Erfindung ist somit denkbar, dass das Dämpfungselement an mehr als einer Seite des Verflüssigers, vorzugsweise an zwei bis vier Seiten des Verflüssigers angeordnet ist. Denkbar ist es beispielsweise, dass der Verflüssiger zwei seitliche Bereiche, eine obere und eine untere Seite aufweist und dass sich das Dämpfungselement an und/oder parallel zu diesen Seiten des Verflüssigers erstreckt. In diesem Beispielfall sind die Vorderseite und die Rückseite des Verflüssigers offen und bilden beispielsweise die Eintritts- und Austrittsöffnung für Luft oder ein sonstiges Medium, das den Verflüssiger umströmt und/oder durchströmt.

In weiterer Ausgestaltung der Erfindung ist vorgesehen, dass ein Ventilator vorgesehen ist, der derart angeordnet ist, dass mit diesem der Verflüssiger zwangsbelüftet werden kann. Vorzugsweise ist der Ventilator derart angeordnet, dass Luft oder ein sonstiges Medium durch den Strömungskanal gefördert wird, der teilweise oder vollständig durch das Dämpfungselement gebildet wird. Der Verflüssiger wird in diesem Fall somit zwangsbelüftet.

Weiterhin kann vorgesehen sein, dass das Dämpfungselement ein oder mehrteilig ausgebildet ist. Es kann beispielsweise ein Oberteil und ein Unterteil aufweisen, zwischen denen der Verflüssiger aufgenommen ist. Dabei ist vorzugsweise vorgesehen, dass das Dämpfungselement den Verflüssiger an vier Seiten umgibt. Selbstverständlich gilt dies auch für eine einteilige Ausführung des Dämpfungselementes, die ebenfalls von der Erfindung mit umfaßt ist.

In weiterer Ausgestaltung der Erfindung ist vorgesehen, dass das Dämpfungselement derart ausgebildet ist, dass es den Verflüssiger nur teilweise berührt bzw. fixiert oder aufnimmt.

Dies hat den Vorteil, dass die Verflüssigeroberfläche größtenteils freiliegt und von einem kühlenden Medium, wie Luft umströmt werden kann. Der Verflüssiger liegt zum größten Teil frei und kann dabei auch an der zu dem Dämpfungselement gewandten Seite von Luft umströmt werden. Vorzugsweise ist somit vorgesehen, dass das Dämpfungselement nicht vollflächig auf der Oberfläche bzw. auf den Oberflächen des Verflüssigers aufliegt, sondern nur punktuell bzw. partiell. Somit existieren Bereiche zwischen dem Dämpfungselement und dem Verflüssiger, durch die Luft oder ein sonstiges Kühlmedium strömen kann, wodurch die Wärmeabfuhr von dem Verflüssiger entsprechend verbessert wird.

Des Weiteren kann das Dämpfungselement auch Aufnahmen und/oder Konturen aufweisen, die relativ zu dem Verflüssiger derart angeordnet sind, dass ein Verschieben bzw. Verrutschen des Verflüssigers relativ zu dem Dämpfungselement verhindert wird. In diesem Fall dient das Dämpfungselement auch als Fixierungsmittel für den Verflüssiger, das den Verflüssiger in einer bestimmten Position hält. Somit ist eine vergleichsweise einfache Montage des Verflüssigers möglich.

In weiterer Ausgestaltung der Erfindung ist vorgesehen, dass das Material des Dämpfungselementes wärmedämmende Eigenschaften aufweist, so dass es die Verflüssigerabwärme zumindest zum Teil von den an das Dämpfungselement angrenzenden Bereichen des Gerätes fernhält.

Vorzugsweise weist das Dämpfungselement eine hohe Temperaturbeständigkeit, vorzugsweise von bis zu 150 °C oder bis zu 120°C auf. Diese Temperatur kann ein Verflüssiger annehmen. Diese wärmeabschirmende Eigenschaft hat zur Folge, dass die an das Dämpfungselement bzw. an den Verflüsiger angrenzenden Bauteile des Gerätes keine so hohen Anforderungen an ihre Temperaturbeständigkeit erfüllen müssen, was sich im Hinblick auf die Kosten der Teile positiv auswirkt.

Die vorliegende Erfindung betrifft des Weiteren die Verwendung eines Dämpfungselementes, das teilweise oder vollständig aus einem geschäumten und/oder expandierten Material, vorzugsweise aus Schaumstoff und/oder einem expandierten Polymermaterial bzw. Kunststoffschaum und insbesondere aus expandiertem Polypropylen (EPP), besteht oder dieses aufweist zur schwingungsgedämpften Anordnung eines Verflüssigers eines Kühl- und/oder Gefriergerätes und/oder die Verwendung eines Dämpfungselementes zur Aufnahme eines Verflüssigers eines Kühl- und/oder Gefriergerätes derart, dass das Dämpfungselement den Verflüssiger auf wenigstens zwei Seiten umgibt und/oder einen Strömungskanal bildet oder begrenzt, in dem der Verflüssiger angeordnet ist. Der Schaumstoff kann beispielsweise aus PE und/oder PP bestehen oder einen oder beide dieser Polymere aufweisen.

Dieses Dämpfungselement weist vorzugsweise die oben genannten Eigenschaften auf.

Die Erfindung betrifft ferner ein Verfahren zur Montage eines Verflüssigers eines Kühl- und/oder Gefriergerätes mit den Schritten: Einlegen des Verflüssigers in eine Aufnahme und Montieren der Aufnahme an einem Geräteteil oder Montieren der Aufnahme an einem Geräteteil und Einlegen des Verflüssigers in das montierte Geräteteil, wobei es sich bei der Aufnahme um ein Dämpfungselement handelt, mittels dessen Schwingungen des Verflüssigers gedämpft werden. Das Dämpfungselement weist vorzugsweise die oben genannten Eigenschaften auf. Es ist in dieser Ausgestaltung der Erfindung nicht erforderlich wie bei anderen üblichen Varianten die Schwingungsabsorption die Dämpfungselemente mit einem vergleichsweise hohen Aufwand zu montieren.

Bei dem Verflüssiger kann es sich beispielsweise um einen DrahtrohrBlockverflüssiger, Spiralverflüssiger oder um einen gerollten Drahtrohrverflüssiger oder auch um eine andere Ausführungsform handeln.

Bei der Komponente, an der der Verflüssiger bzw. das Dämpfungselement fixiert wird, kann es sich beispielsweise um einen Teil des Korpus des Gerätes oder auch um eine Trägerplatte handeln.

Der Verflüssiger kann beispielsweise im Sockelbereich oder im Deckenbereich oder auch im Bereich der Rückwand des Gerätes angeordnet sein, wobei eine Trägerplatte vorgesehen sein kann, an der das Dämpfungselement mit dem Verflüssiger montiert ist. Das Dämpfungselement und der Verflüssiger können somit Bestandteile eines Sockelaggregates und/oder eines Deckenaggregates sein, wobei diese Aggregate mehrere oder alle Komponenten des Kältemittelkreislaufes aufweisen und vorzugsweise auf einer oder mehreren Trägerplatten montiert sind.

Das Dämpfungselement ist vorzugsweise derart ausgebildet, dass der Verflüssiger keine für den Nutzer störenden Vibrationen bzw. Schwingungen an die umgebenden Teile des Gerätes abgeben kann, indem das Dämpfungselement diese Schwingungen teilweise oder vollständig absorbiert.

Weitere Einzelheiten und Vorteile der Erfindung werden anhand eines in der Zeichnung näher beschriebenen Ausführungsbeispiels näher erläutert. Es zeigen:
- Figur 1:: eine Explosionsdarstellung des Dämpfungselementes mit Verflüssiger,
- Figur 2:: eine schematische Ansicht der Durchströmung des Innenraums des Dämpfungselementes mit Luft,
- Figur 3:: eine Frontansicht der Anordnung gemäß Figur 2,
- Figur 4:: eine Draufsicht auf die Anordnung gemäß Figur 2 und
- Figur 5:: eine Seitenansicht der Anordnung gemäß Figur 2.

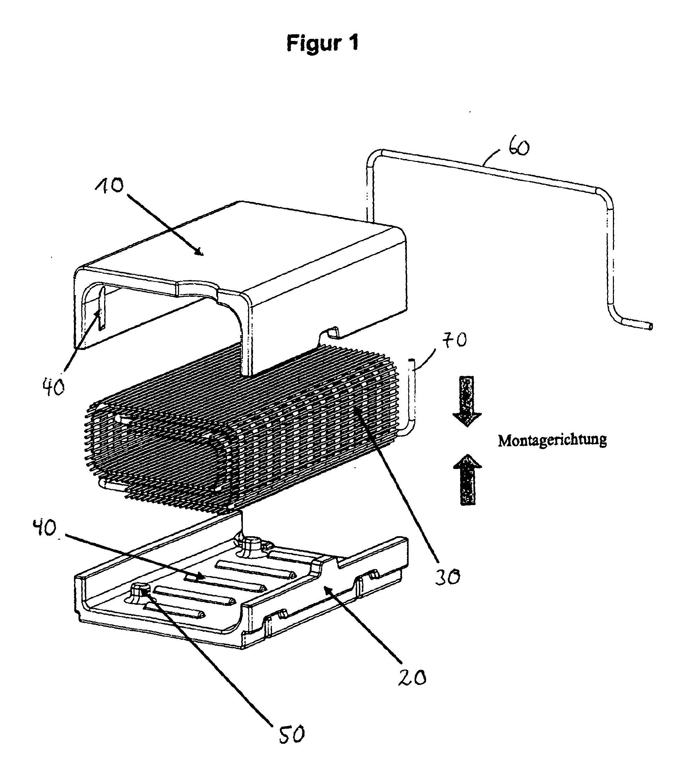

Figur 1 zeigt mit dem Bezugszeichen 10 aus einem EPP bestehendes Oberteil des erfindungsgemäßen Dämpfungselementes. Das Bezugszeichen 20 kennzeichnet das ebenfalls aus EPP bestehende Unterteil des Dämpfungselementes.

Anstelle von oder zusätzlich zu EPP kommt auch ein ähnliches expandiertes und/oder geschäumtes Material in Betracht. Denkbar ist der Einsatz eines Schaumstoffmaterials.

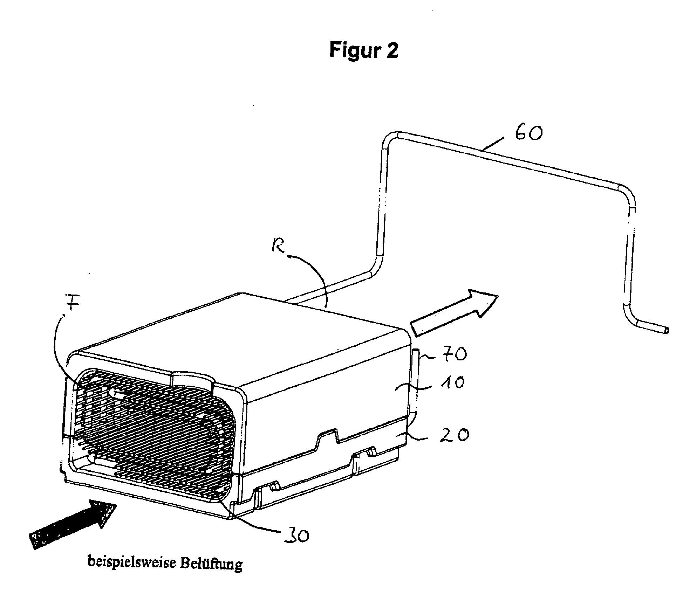

Beide Teile 10, 20 sind im Querschnitt U-förmig aufgebaut und derart zusammenfügbar, dass sie im zusammengesetzten Zustand einen Raum begrenzen, in dem der Verflüssiger 30 aufgenommen ist. Im zusammengefügten Zustand stehen die senkrechten Schenkel des Oberteils 10 sowie des Unterteils 20 aufeinander, wie dies beispielsweise aus Figur 2 hervorgeht. In diesem Zustand begrenzen die beiden Teile 10, 20 einen Raum, der bis auf eine in Figur 2 ersichtliche Frontseite F und eine davon abgewande, in Figur 2 nicht ersichtliche Rückseite R geschlossen ist. Die beiden Teile 10, 20 bilden somit einen an seinen beiden Enden offenen Strömungskanal.

Das Oberteil 10 und/oder das Unterteil 20 weisen auf ihrer zum Verflüssiger gewandten Innenseite Klemmrippen 40 auf, die parallel zu den offenen Seiten des Dämpfungselementes verlaufen. Grundsätzlich kommen auch davon abweichende Orientierungen der Klemmrippen in Betracht. Die Klemmrippen 40 bilden die Kontaktstellen zwischen dem Verflüssiger 30 und den beiden Teilen 10, 20, die das Dämpfungselement bilden. Dies bedeutet, dass der Verflüssiger 30 mit seiner Au-βenseite nicht vollflächig mit den Innenseiten der Teile 10, 20 in Kontakt steht, sondern nur mit den genannten erhabenen Klemmrippen 40.

Die Teile 10, 20 nehmen den Verflüssiger 30 somit nur partiell auf bzw. fixieren diesen nur partiell und nicht vollflächig.

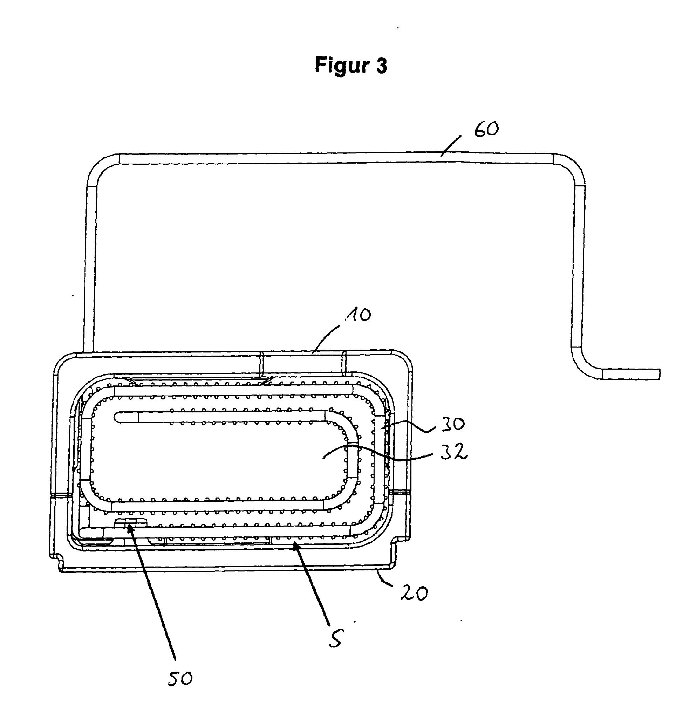

Dies hat den Vorteil, dass zwischen den Innenseiten der Teile 10, 20 und der Au-βenseite des Verflüssigers 30 ein Spalt verbleibt, der in Figur 3 mit dem Bezugszeichen S gekennzeichnet ist. Dieser rundum freie Spalt erlaubt eine Umströmung bzw. Durchströmung des Bereiches zwischen dem Dämpfungselement 10, 20 und der Außenseite des Verflüssigers 30.

Zusätzlich wird der Verflüssiger in seinem inneren Bereich 32 durchströmt. Die beispielsweise in Figur 2 durch Pfeile angedeutete Luftströmung (Zwangsbelüftung) wird durch einen nicht dargestellten Ventilator erzeugt, der vor oder hinter dem Verflüssiger 30 angeordnet sein kann und ebenfalls Bestandteil eines Sockel- oder Deckenaggregates des Gerätes bilden kann.

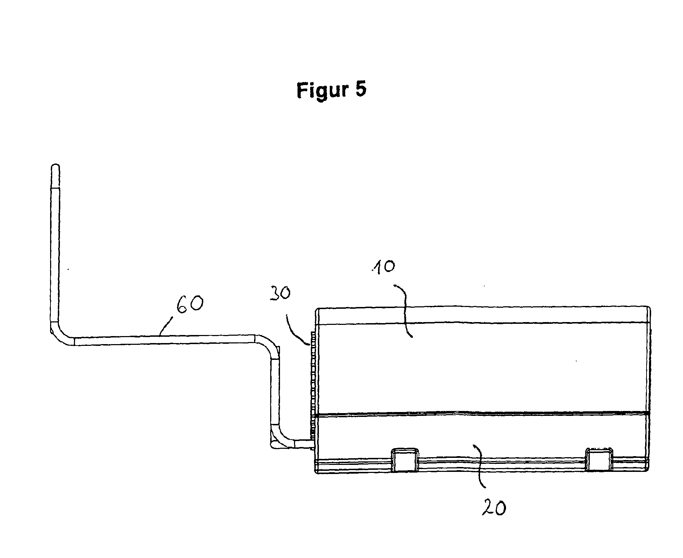

Der Verflüssiger 30, der beispielsweise als Drahtrohrblockverflüssiger ausgeführt sein kann, ist derart dimensioniert, dass er in dem Aufnahmeraum des Dämpfungselementes aufnehmbar bzw. aufgenommen ist. Dies ergibt sich beispielsweise aus den Figuren 3 bis 5.

Aus Figur 1 und 3 ist des Weiteren eine mit dem Bezugszeichen 50 gekennzeichnete Haltestruktur ersichtlich, die sich von der Innenseite des Oberteils 10 und/oder des Unterteils 20 erstreckt.

Diese Haltestruktur erstreckt sich derartig in den Verflüssiger, dass ein Verschieben des Veflüssigers 30 relativ zu dem Oberteil 10 bzw. Unterteil 20 ausgeschlossen ist.

Die Haltestrukturen 50 sind als kreisförmige Vorsprünge ausgebildet, können aber auch eine andere Form aufweisen.

Die genannten Klemmelemente 40 und/oder die Haltestrukturen 50 können einstückig mit dem Ober- bzw. Unterteil 10, 20 ausgebildet sein oder auch als gesonderte Teile ausgeführt sein, die mit den Teilen 10, 20 verbunden werden.

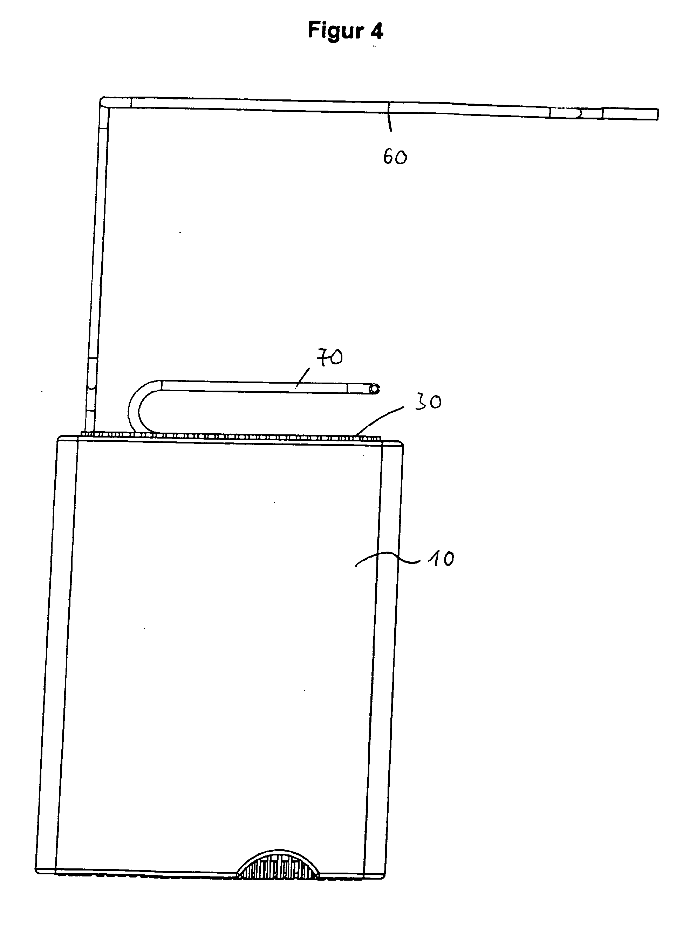

Der Verflüssiger 30 steht mit einem von dem nicht dargestellten Kompressor führenden Leitungsabschnitt 60 und einem zu dem Verdampfer bzw. der diesem vorgeschalteten Drosselkapillare führenden Leitungsabschnitt 70 in Verbindung, wie dies beispielsweise aus Figur 4 ersichtlich ist. Beide Leitungsabschnitte 60, 70 erstrecken sich von derselben Seite des Verflüssigers 30. Der Kompressor ist vorzugsweise ebenfalls Bestandteil eines Sockel- bzw. Deckenaggregates.

Aus den Figuren 2 bis 5 ist ersichtlich, dass das Dämpfungselement sich abgesehen von Front- und Rückseite vollumfänglich um den Verflüssiger 30 herum erstreckt, wobei der Verflüssiger vollständig in den durch die Teile 10, 20 umgebenen Raum aufgenommen ist, und dass nur zwei gegenüberliegende Seiten, nämlich die Frontseite F und die Rückseite R offen sind. Diese dienen zur Zu- bzw. Abfuhr von Luft, die mittels eines Gebläses durch die Aufnahme des Dämpfungselementes und damit über die Rohrleitungen und Kühlelemente des Verflüssigers 30 geführt wird.

Durch die von der Formgebung her günstige Ausführung der Teile 10, 20 wird die Montage in der Fertigung vereinfacht. Es ist nicht erforderlich, wie bei anderen üblichen Varianten der Schwingungsabsorption (meist Gummi-/TPE-Teile) diese mit erhöhtem Aufwand zu montieren.

Das EPP-Material bzw. das PE und/oder PP-Schaumstoffmaterial weist eine hohe Temperaturbeständigkeit auf, was den Vorteil mit sich bringt, dass an das Dämpfungselement angrenzende Teile, wie Teile des Korpus, einer Trägerplatte etc. hinsichtlich der Temperaturbeständigkeit keine sehr hohen Anforderungen erfüllen müssen, wodurch vergleichsweise kostengünstige Materialen zum Einsatz kommen können.

Bevorzugt ist es, die dargestellte Anordnung aus Dämpfungselement und Verflüssiger im Sockelbereich, d. h. im unteren Bereich oder im Deckenbereich, d. h. im oberen Bereich eines Kühl- und/oder Gefriergerätes anzuordnen. Durch das Dämpfungselement werden nicht nur Schwingungen des Veflüssigers gedämpft oder gänzlich absorbiert, sondern es dient auch als Aufnahme für den Verflüssiger. Der Verflüssiger steht somit vorzugsweise nicht unmittelbar mit anderen Teilen des Gerätes in Verbindung, sondern nur mittelbar über das genannte Dämpfungselement.

## Patentansprüche

1. Kühl- und/oder Gefriergerät mit wenigstens einem Kältemittelkreislauf, der zumindest einen Verflüssiger aufweist, der mit wenigstens einem Dämpfungselement in Verbindung steht, das Schwingungen des Verflüssigers dämpft und das zwischen dem Verflüssiger und wenigstens einem Teil des Gerätes angeordnet ist, **dadurch gekennzeichnet, dass** das Dämpfungselement teilweise oder vollständig aus einem geschäumten und/oder expandierten Material, vorzugsweise aus Schaumstoff, insbesondere aus PP oder PE, und/oder einem expandierten Polymermaterial und insbesondere aus expandiertem Polypropylen (EPP), besteht oder dieses aufweist.

2. Kühl- und/oder Gefriergerät mit wenigstens einem Kältemittelkreislauf, der zumindest einen Verflüssiger aufweist, der mit wenigstens einem Dämpfungselement in Verbindung steht, das Schwingungen des Verflüssigers dämpft und das zwischen dem Verflüssiger und wenigstens einem Teil des Gerätes angeordnet ist, **dadurch gekennzeichnet, dass** das Dämpfungselement den Verflüssiger auf wenigstens zwei Seiten umgibt und/oder dass das Dämpfungselement einen Strömungskanal bildet oder begrenzt, in dem der Verflüssiger angeordnet ist.

3. Kühl- und/oder Gefriergerät nach Anspruch 1, **dadurch gekennzeichnet, dass** das Dämpfungselement den Verflüssiger auf wenigstens zwei Seiten umgibt und/oder dass das Dämpfungselement einen Strömungskanal bildet oder begrenzt, in dem der Verflüssiger angeordnet ist.

4. Kühl- und/oder Gefriergerät nach einem der vorhergehenden Ansprüche, **dadurch gekennzeichnet, dass** das Dämpfungselement an mehr als einer Seite des Verflüssigers, vorzugsweise an zwei bis vier Seiten des Verflüssigers angeordnet ist und/oder dass das Dämpfungselement derart angeordnet ist, dass es eine Einlassöffnung und eine Auslassöffnung definiert, durch die Luft zu dem Verflüssiger hin bzw. von diesem weg strömt.

5. Kühl- und/oder Gefriergerät nach einem der vorhergehenden Ansprüche, **dadurch gekennzeichnet, dass** ein Ventilator vorgesehen ist, der relativ zu dem Verflüssiger derart angeordnet ist, dass der Verflüssiger im Betrieb des Ventilators von mittels dem Ventilator geförderter Luft oder einem sonstigen Medium umströmt und/oder durchströmt wird.

6. Kühl- und/oder Gefriergerät nach einem der vorhergehenden Ansprüche, **dadurch gekennzeichnet, dass** das Dämpfungselement ein oder mehrteilig ausgebildet ist und/oder ein Oberteil und ein Unterteil aufweist, die einen Raum begrenzen, in dem sich der Verflüssiger befindet.

7. Kühl- und/oder Gefriergerät nach einem der vorhergehenden Ansprüche, **dadurch gekennzeichnet, dass** das Dämpfungselement derart ausgebildet ist, dass es den Verflüssiger nur teilweise und nicht vollflächig berührt bzw. fixiert oder aufnimmt und/oder dass das Dämpfungselement eine oder mehrere Aufnahmen und/oder Konturen aufweist, die derart angeordnet sind, dass ein Verschieben bzw. Verrutschen des Verflüssigers relativ zu dem Dämpfungselement verhindert wird.

8. Kühl- und/oder Gefriergerät nach einem der vorhergehenden Ansprüche, **dadurch gekennzeichnet, dass** das Material des Dämpfungselementes zumindest bereichsweise wärmedämmende Eigenschaften aufweist, so dass es die Verflüssigerabwärme zu mindest zum Teil von den angrenzenden Bereichen des Gerätes fernhält.

9. Verwendung eines Dämpfungselementes, das teilweise oder vollständig aus einem geschäumten und/oder expandierten Material, vorzugsweise aus einem Schaumstoff, vorzugsweise aus PE oder PP, und/oder aus einem expandierten Polymermaterial und insbesondere aus expandiertem Polypropylen (EPP), besteht oder dieses aufweist, zur schwingungsgedämpften Anordnung eines Verflüssigers eines Kühl- und/oder Gefriergerätes und/oder Verwendung eines Dämpfungselementes zur Aufnahme eines Verflüssigers eines Kühl- und/oder Gefriergerätes derart, dass das Dämpfungselement den Verflüssiger auf wenigstens zwei Seiten umgibt und/oder einen Strömungskanal bildet oder begrenzt, in dem der Verflüssiger angeordnet ist.

10. Verfahren zur Montage eines Verflüssigers eines Kühl- und/oder Gefriergerätes mit den Schritten: Einlegen des Verflüssigers in eine den Verflüssiger auf wenigstens zwei Seiten begrenzenden Aufnahme und Montieren der Aufnahme an einem Geräteteil oder Montieren der Aufnahme an einem Geräteteil und Einlegen des Verflüssigers in das montierte Geräteteil, wobei es sich bei der Aufnahme um ein Dämpfungselement handelt, mittels dessen Schwingungen des Verflüssigers gedämpft werden.
